# EUROPÄISCHE PATENTSCHRIFT

(11) **EP 4 065 344 B1**
(45) Veröffentlichungstag und Bekanntmachung des Hinweises auf die Patenterteilung: **25.06.2025**
(21) Anmeldenummer: 20797365.2
(22) Anmeldetag: 08.10.2020
(51) Int. Cl.: B29C 64/129, B29C 64/165, B29C 64/282, B29C 64/291, B33Y 10/00, B33Y 30/00

(54) **VERFAHREN UND VORRICHTUNG ZUM HERSTELLEN VON 3D-FORMTEILEN MITTELS HOCHLEISTUNGSSTRAHLER**
METHOD AND APPARATUS FOR PRODUCING 3D SHAPED ARTICLES USING HIGH-PERFORMANCE RADIATION EMITTERS
PROCÉDÉ ET DISPOSITIF POUR LA PRODUCTION DE PIÈCES FAÇONNÉES EN 3D À L'AIDE D'ÉMETTEURS DE RAYONNEMENT À HAUTE PERFORMANCE

(30) Priorität: 11.10.2019 DE 102019007073
(43) Veröffentlichungstag der Anmeldung: 05.10.2022
(73) Patentinhaber: voxeljet AG, 86316 Friedberg (DE)
(72) Erfinder: SCHECK, Christoph, 86154 Augsburg (DE); WEIGEL, Melanie, 86159 Augsburg (DE); FUCHS, Alexander Franz, 86368 Gersthofen (DE)
(74) Vertreter: Hoefer & Partner Patentanwälte mbB
(86) Internationale Anmeldenummer: PCT/DE2020/000235
(87) Internationale Veröffentlichungsnummer: WO 2021/069003

(56) Entgegenhaltungen:
- EP-A1- 2 226 683
- EP-A1- 3 488 996
- WO-A1-2017/049201
- WO-A1-2019/015707
- CN-A- 110 142 958

## Beschreibung

Die Erfindung betrifft ein Verfahren und eine Vorrichtung zum Herstellen dreidimensionaler Modelle mittels Hochleistungsstrahler.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht mittels Beschichter (Recoater) auf eine Bauplattform aufgetragen und das Partikelmaterial (allgemein Fluid) selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wird die Bauplattform um eine Schichtdicke in einem Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt (Formteil).

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

In ähnlicher Weise arbeiten auch andere Pulver-gestützte Rapid-Prototyping-Prozesse (auch als schichtweises Aufbauen von Modellen oder als Schichtbautechnik bezeichnete Verfahren), wie z.B. das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren verstanden.

Das 3D-Drucken auf Basis pulverförmiger Werkstoffe und Eintrag flüssiger Binder ist unter den Schichtbautechniken das schnellste Verfahren.

Mit diesem Verfahren lassen sich verschiedene Partikelmaterialien, unter anderem auch polymere Werkstoffe, verarbeiten. Der Nachteil besteht hier jedoch darin, dass die Partikelmaterialschüttung eine gewisse Schüttdichte, die üblicherweise 60% der Feststoffdichte beträgt, nicht übersteigen kann. Die Festigkeit der gewünschten Bauteile hängt jedoch maßgeblich von der erreichten Dichte ab. Insofern wäre es hier für eine hohe Festigkeit der Bauteile erforderlich, 40% und mehr des Partikelmaterialvolumens in Form des flüssigen Binders zuzugeben. Dies ist nicht nur aufgrund des Einzeltropfeneintrages ein relativ zeitaufwändiger Prozess, sondern bedingt auch viele Prozessprobleme, die z.B. durch die zwangsläufige Schwindung der Flüssigkeitsmenge beim Verfestigen gegeben sind.

In einer anderen Ausführungsform, der unter dem Begriff "High-Speed-Sintering" (HSS) in der Fachwelt bekannt ist, erfolgt die Verfestigung des Partikelmaterials über Eintrag von Infrarotstrahlung. Das Partikelmaterial wird dabei physikalisch über einen Aufschmelzvorgang gebunden. Hierbei wird die vergleichsweise schlechte Aufnahme von Wärmestrahlung bei farblosen Kunststoffen ausgenutzt. Diese lässt sich durch Einbringen eines IR-Akzeptors (Absorber) in den Kunststoff um ein Vielfaches steigern. Die IR-Strahlung kann dabei über verschiedene Möglichkeiten wie z.B. einer stabförmigen IR-Lampe eingebracht werden, die gleichmäßig über das Baufeld bewegt wird. Die Selektivität wird über das gezielte Bedrucken der jeweiligen Schicht mit einem IR-Akzeptor erreicht.

An den Stellen, die bedruckt wurden, koppelt die IR Strahlung dadurch wesentlich besser in das Partikelmaterial ein, als in den unbedruckten Bereichen. Dies führt zu einer selektiven Erwärmung in der Schicht über den Schmelzpunkt hinaus und damit zur selektiven Verfestigung. Dieser Prozess wird z.B. in EP1740367B1 und EP1648686B1 beschrieben.

CN110142958 offenbart ein Strahleraggregat für eine 3D-Druckvorrichtung, wobei das Strahleraggregat mehrere Strahlereinheiten aufweist, die auf einem Haltemittel angebracht sind und wobei jede Strahlereinheit in einem definierten Drehwinkel alpha auf dem Haltemittel angebracht ist und die Strahlereinheiten mit Kühlmittel kombiniert sind.

Die High Speed Sintering Verfahren benutzen Strahler, die Einfluss auf die Verfahrensführung haben können und die Arbeitsergebnisse bzw. die Qualität der hergestellten Formteile beeinflussen. Eine wichtige Komponente stellt dabei das Sinter-Aggregat dar, welches in einer Ausführung mittels einer kurzwelligen oder nahinfraroten Strahlungsquelle die mit IR-Akzeptor benetzen Flächen über die Schmelztemperatur des Partikelmaterials anhebt und dort somit zur Verfestigung führt. In einer Ausführung nach dem Stand der Technik wird die in Teilen mit IR-Akzeptor benetzte Partikelmaterialoberfläche mittels dieser Strahlungsquelle überstrichen, wobei der als Strahlerröhre linienförmig ausgeführte Emitter senkrecht zur Bewegungsrichtung angeordnet ist.

Aufgabe der vorliegenden Erfindung ist es, konstruktive Mittel bereitzustellen, die ein verbessertes 3D-Druckverfahren erlauben oder zumindest die Nachteile des Standes der Technik verbessern helfen oder die Nachteile des Standes der Technik ganz zu vermeiden.

Eine weitere Aufgabe der vorliegenden Erfindung war es, ein Verfahren und eine Vorrichtung bereitzustellen, die einen vorteilhaften Strahler verwendet, der zu verbesserten Arbeitsergebnissen führt.

### Kurze Zusammenfassung der Erfindung

In einem Aspekt betrifft die Erfindung ein Strahleraggregat, geeignet zum Herstellen von 3D-Formteilen bzw. geeignet für eine 3D-Druckvorrichtung, wobei das Strahleraggregat mehrere Strahlereinheiten aufweist, die auf einem Haltemittel angebracht sind, welches die Partikelmaterialoberfläche überstreicht und wobei jede Strahlereinheit in einem definierten Drehwinkel alpha auf dem Haltemittel angebracht ist und die Strahlereinheiten unterschiedliche oder den selben definierten Drehwinkel alpha aufweisen oder ein oder mehrere Strahlereinheiten einen definierten Drehwinkel alpha (Gruppe 1) und eine oder mehrere Strahlereinheiten einen anderen definierten Drehwinkel alpha (Gruppe 2) aufweisen und die Strahlereinheiten mit einem oder mehreren Kühlmitteln kombiniert sind und wobei der Drehwinkel alpha im Randbereich des Strahleraggregats unterschiedlich ist zum Innenbereich des Strahleraggregats und wobei die Strahlungsintensität im Randbereich des/der Strahleraggregat(s)/e höher eingestellt ist als im Innenbereich des Strahleraggregats.

In einem weiteren Aspekt betrifft die Offenbarung eine 3D-Druckvorrichtung geeignet zum Aufbauen von 3D-Formkörpern, die mindestens ein Strahleraggregat wie hierin beschrieben aufweist.

In einem weiteren Aspekt betrifft die Erfindung ein Verfahren zum Herstellen von 3D-Formteilen, wobei ein Strahleraggregat wie hierin beschrieben verwendet wird.

### Kurze Beschreibung der Figuren

Fig. 1 ist eine beispielhaft dargestellt ist ein Sinterstrahleraggregat von der Seite betrachtet in der yz-Ebene.
Fig. 2 ist eine beispielhafte schematische Darstellung eines marktverfügbaren IR-Strahlers in L-Form.
Fig. 3 ist eine beispielhafte skizzenhafte Darstellung der Auswirkungen der Drehung eines Strahlers an seinem Aufhängepunkt in der xy-Ebene.
Fig. 4 ist ein beispielhaftes Sinterstrahleraggregat korrespondierend zu Fig. 1 mit beispielhaft gedrehten Strahlerröhren, hier von unten betrachtet in der xy-Ebene.
Fig. 5 ist eine beispielhafte Anordnungen von Strahlerröhren innerhalb des Sinterstrahleraggregats in beispielhaften Ausführungen.
Fig. 6 ist eine Draufsicht auf das Strahleraggregat in xy-Ebene mit gedrehten Einzelstrahlerröhren und während der Überfahrt über das Baufeld, hier in Richtung nach oben zeigend.
Fig. 7 ist ein Blockschaltbild einer beispielhaften Ausführung eines rudimentären Regelalgorithmus zur Steuerung der gestellten Leistung jedes einzelnen Emitters um eine gewünschte Temperaturverteilung auf dem Baufeld zu erzielen.

### Ausführliche Beschreibung der Erfindung

Erfindungsgemäß wird eine der Anmeldung zugrunde liegenden Aufgabe gelöst durch eine Vorrichtung gemäß Anspruch 1 oder/und durch ein Verfahren gemäß Anspruch 9. Weitere bevorzugte Aspekte sind in den Unteransprüchen beschrieben.

Im Folgenden werden zunächst einige Begriffe der Offenbarung näher erläutert.

"3D-Formteil", "Formkörper" oder "Bauteil" im Sinne der Offenbarung sind alles mittels des erfindungsgemäßen Verfahrens oder/und der erfindungsgemäßen Vorrichtung hergestellte dreidimensionale Objekte, die eine Formfestigkeit aufweisen.

"Bauraum" ist der geometrische Ort in dem die Partikelmaterialschüttung während des Bauprozesses durch wiederholtes Beschichten mit Partikelmaterial wächst oder durch den die Schüttung bei kontinuierlichen Prinzipien durchläuft. Im Allgemeinen wird der Bauraum durch einen Boden, die Bauplattform, durch Wände und eine offene Deckfläche, die Bauebene, begrenzt. Bei kontinuierlichen Prinzipien existieren meist ein Förderband und begrenzende Seitenwände. Der Bauraum kann auch durch eine sogenannte Jobbox ausgestaltet sein, die eine in die Vorrichtung ein- und ausfahrbare Einheit darstellt und eine Batch-Herstellung erlaubt, wobei eine Jobbox nach Prozessabschluss ausgefahren wird und sofort eine neue Jobbox in die Vorrichtung eingefahren werden kann, sodass das Herstellungsvolumen und somit die Vorrichtungsleistung erhöht wird.

Als "Partikelmaterialien" oder "partikelförmige Baumaterialien" oder "Baumaterialien" oder "Fluid" können alle für den Pulver-basierten 3D Druck bekannten Materialien verwendet werden, insbesondere Polymere, Keramiken und Metalle. Das Partikelmaterial ist vorzugsweise ein trocken frei fließendes Pulver, es kann aber auch ein kohäsives schnittfestes Pulver oder eine partikelbeladene Flüssigkeit verwendet werden. In dieser Schrift werden Partikelmaterial und Pulver synonym verwendet.

Der "Partikelmaterialauftrag" ist der Vorgang bei dem eine definierte Schicht aus Pulver erzeugt wird. Dies kann entweder auf der Bauplattform oder auf einer geneigten Ebene relativ zu einem Förderband bei kontinuierlichen Prinzipen erfolgen. Der Partikelmaterialauftrag wird im Weiteren auch "Beschichtung" oder "Recoaten" genannt.

"Selektiver Flüssigkeitsauftrag" kann im Sinne der Offenbarung nach jedem Partikelmaterialauftrag erfolgen oder je nach den Erfordernissen des Formkörpers und zur Optimierung der Formkörperherstellung auch unregelmäßig, beispielsweise mehrfach bezogen auf einen Partikelmaterialauftrag, erfolgen. Dabei wird ein Schnittbild durch den gewünschten Körper aufgedruckt.

Als "Vorrichtung" zum Durchführen eines Verfahrens gemäß der Offenbarung kann jede bekannte 3D-Druckvorrichtung verwendet werden, die die erforderlichen Bauteile beinhaltet. Übliche Komponenten beinhalten Beschichter, Baufeld, Mittel zum Verfahren des Baufeldes oder anderer Bauteile bei kontinuierlichen Verfahren, Dosiervorrichtungen und Wärme- und Bestrahlungsmittel und andere dem Fachmann bekannte Bauteile, die deshalb hier nicht näher ausgeführt werden.

Das Baumaterial gemäß der Offenbarung wird immer in einer "definierten Schicht" oder "Schichtstärke" aufgebracht, die je nach Baumaterial und Verfahrensbedingungen individuell eingestellt wird. Sie beträgt beispielsweise 0,05 bis 5 mm, vorzugsweise 0,07 bis 2 mm.

Ein "Beschichter" im Sinne der Offenbarung ist ein Vorrichtungsteil, das Fluid, z.B. Partikelmaterial wie z.B. mineralische oder metallische Materialien oder Kunststoffe, Holz in Form von Partikeln oder Gemische davon, aufnehmen kann und gesteuert auf eine Bauplattform einer 3D-Vorrichtung in Schichten abgibt oder aufträgt. Dabei kann der Beschichter länglich ausgestaltet sein und oberhalb einer Austrittsöffnung befindet sich in einem Vorratsbehälter das Partikelmaterial.

Ein "Vorratsbehälter" im Sinne der Offenbarung ist das Bauteil eines Beschichters zu verstehen, in dem das Partikelmaterial eingefüllt ist und über eine Austrittsöffnung gesteuert auf die Bauplattform der 3D-Vorrichtung abgegeben und aufgetragen wird.

Eine "Beschichterklinge" im Sinne der Offenbarung ist ein im Wesentlichen flaches metallisches oder aus einem anderen geeigneten Material gefertigtes Bauteil, das sich an der Austrittsöffnung des Beschichters befindet und über das das Fluid auf die Bauplattform abgegeben wird und glatt gestrichen wird. Ein Beschichter kann eine oder zwei oder mehrere Beschichterklingen aufweisen. Eine Beschichterklinge kann eine Schwingklinge sein, die Schwingungen im Sinne einer Drehbewegung ausführt, wenn sie angeregt wird. Weiterhin kann diese Schwingung ein- und ausgestellt werden durch ein Mittel zum Erzeugen von Schwingungen.

Je nach der Anordnung der Austrittsöffnung ist die Beschichterklinge im Sinne der Offenbarung "im Wesentlichen waagerecht" oder "im Wesentlichen senkrecht" angeordnet.

"Strahleraggregat" im Sinne der Offenbarung ist eine Anordnung von Strahlereinheiten, die in definierter Weise in ihrem Drehwinkel alpha angeordnet sind, wobei jede Strahlereinheit oder eine Gruppe von Strahlereinheiten denselben Winkel alpha haben können.

"Strahlereinheit" im Sinne der Offenbarung ist eine Einheit, die drehbar angeordnet sein kann und Licht eines bestimmten Spektrums emittiert.

"Drehwinkel alpha" im Sinne der Offenbarung ist der Winkel, in dem eine Strahlereinheit in dem Strahleraggregat angeordnet ist, wobei die Bezugsebene senkrecht zur Bewegungsrichtung des Strahleraggregats über die Partikelmaterialoberfläche ausgerichtet ist. Dabei kann in einem Strahleraggregat jede Strahlereinheit in einem unterschiedlichen oder demselben Winkel angeordnet sein und es können dabei auch verschiedene Gruppen von Strahlereinheiten entsprechend den Winkeln alpha gebildet werden, z.B. Gruppe 1, Gruppe 2 etc.

"Gruppe 1" bzw. "Gruppe 2" bis zu "Gruppe n" im Sinne der Offenbarung sind Gruppen von Strahlereinheiten, die denselben Winkel ausbilden.

"Kühlmittel" im Sinne der Offenbarung ist ein Mittel, das eine Strahlereinheit kühlen kann wie z.B. Wasser oder eine andere Flüssigkeit oder ein Gebläsestrom.

"Randbereich" im Sinne der Offenbarung ist der Bereich eines Strahleraggregats, der sich am Rand des Strahleraggregats befindet und zum Innenbereich abgegrenzt werden kann. Dabei bilden Randbereich und Innenbereich den Gesamtbereich des Strahleraggregats hinsichtlich seiner Fläche, auf der die Strahlereinheiten angebracht sind.

"Innenbereich" im Sinne der Offenbarung ist der Bereich eines Strahleraggregats, der sich im Inneren des Strahleraggregats befindet und zum Randbereich abgegrenzt werden kann.

"Spektrumswandler" im Sinne der Offenbarung ist ein Mittel, das das Spektrum von emittiertem Licht verschiebt. Es kann z.B. Wasser sein.

"Strahlungsintensität" im Sinne der Offenbarung ist die pro betrachteter Fläche abgegebene Leistung elektro-magnetischer Strahlung eines Emitters elektro-magnetischer Strahlung wie z.B. einer Strahlereinheit, einer Gruppe von Strahlereinheiten oder eines Strahleraggregats.

"Kurzwelliges Spektrum" im Sinne der Offenbarung ist elektromagnetische Strahlung im Wesentlichen planckschen Spektrums mit einem Wellenlängenmaximum von 1,2 µm oder kleiner.

"Nahinfrarotbereich" im Sinne der Offenbarung bezeichnet elektromagnetische Strahlung einer Wellenlänge von 1 µm oder kleiner.

"Gleichmäßiges Spektrum" einer Gruppe von Strahlereinheiten ist gemäß der Offenbarung im Wesentlichen deckungsgleiche Wellenlängenverteilung eines planckschen Strahlungsspektrums oder identischem Wellenlängenmaximum.

"Strahlerspektrum" im Sinne der Offenbarung ist ein Ensemble an Wellenlängen emittierter elektro-magnetischer Strahlung, insbesondere in Form einer planckschen Strahlungsverteilung.

"Kontinuierliche Strahlungsintensität" bezeichnet im Sinne der Offenbarung ein nahtloses Aneinanderknüpfen abgegebener Leistung einer Strahlereinheit zu einem zusammenhängenden Ensemble auf einer Fläche.

"Schichtdaten" bezeichnet die zum schichtweisen Aufbau eines Formkörpers benötigten Schnittdaten, welche aus den virtuellen digital zur Verfügung stehenden Formkörperdaten im Vorfeld errechnet wird.

"Filamenttemperatur" oder "Wendeltemperatur" bezeichnet die erzeugte Temperatur eines durch Anlegen einer elektrischen Spannung aufgeheizten, in einem Glaskolben befindlichen Drahtelements, meist als Wendel ausgeführt.

### Weitere Aspekte der Erfindung werden im Folgenden weiter beschrieben.

Insbesondere wird die der Anmeldung zugrunde liegende Aufgabe gelöst durch ein Strahleraggregat geeignet für eine 3D-Druckvorrichtung, wobei das Strahleraggregat mehrere Strahlereinheiten aufweist, die auf einem Haltemittel angebracht sind und wobei jede Strahlereinheit in einem definierten Drehwinkel alpha auf dem Haltemittel angebracht ist und die Strahlereinheiten unterschiedliche oder den selben definierten Drehwinkel alpha aufweisen oder ein oder mehrere Strahlereinheiten einen definierten Drehwinkel alpha (Gruppe 1) und eine oder mehrere Strahlereinheiten einen anderen definierten Drehwinkel alpha (Gruppe 2) aufweisen und die Strahlereinheiten mit einem oder mehreren Kühlmitteln kombiniert sind und wobei der Drehwinkel alpha im Randbereich des Strahleraggregats unterschiedlich ist zum Innenbereich des Strahleraggregats und wobei die Strahlungsintensität im Randbereich des/der Strahleraggregat(s)/e höher eingestellt ist als im Innenbereich des Strahleraggregats.

Der Drehwinkel alpha kann je nach den Erfordernissen im Randbereich und im Inneren des Strahleraggregats unterschiedlich eingestellt werden, wobei mittels des Modifizieren des Drehwinkels der Leistungseintrag in unterschiedlichen Bereichen variiert und somit optimiert werden kann. Es kann dabei vorteilhaft sein, wenn der Drehwinkel alpha im Randbereich des Strahleraggregats größer ist als im Innenbereich des Strahleraggregats.

Es kann z.B. auch wünschenswert sein, die Strahlungsintensität in unterschiedlichen Bereichen unterschiedlich zu wählen. Z.B. kann es vorteilhaft sein, wenn die Strahlungsintensität im Randbereich des/der Strahleraggregat(s)/e höher eingestellt ist als im Innenbereich des Strahleraggregats.

Es können auch weitere Parameter in bestimmter Weise gewählt werden, z.B. kann es vorteilhaft sein, wenn der Randbereich im Strahleraggregat dem Abstand des Strahleraggregats zu seiner Baufläche entspricht.

Das Strahleraggregat kann mit weiteren Mitteln kombiniert werden, z.B. können die Strahlereinheiten mit einem Spektrumswandler kombiniert sein.

Es kann auch vorteilhaft sein, wenn die Strahlereinheiten gekühlt werden, z.B. können die Strahlereinheiten mit einem Kühlmittel, vorzugsweise in ihrer Gesamtheit, umspült werden, vorzugsweise können die Strahlereinheiten direkt umspült werden.

Dabei kann das Kühlmittel, z.B. Wasser oder/und ein Spektrumswandler sein.

Das ausgesendete Spektrum wird je nach den Erfordernissen gewählt, wobei es vorteilhaft sein kann, wenn das Strahleraggregat im Wesentlichen ein kurzwelliges Spektrum aussendet.

In einem Strahleraggregat nach der Offenbarung wird das Spektrum je nach den baulichen Erfordernissen ausgewählt, wobei es vorteilhaft sein kann, wenn das Strahleraggregat ein im Wesentlichen gleichmäßiges Spektrum auf dem Baufeld erzeugt.

Es können Strahlereinheiten je nach den Erfordernissen gewählt werden, wobei es vorteilhaft sein kann, wenn die Strahlereinheiten im Wesentlichen eine L-Form aufweisen.

In einem weiteren Aspekt betrifft die Offenbarung eine 3D-Druckvorrichtung geeignet zum Aufbauen von 3D-Formkörpern, die mindestens ein Strahleraggregat wie oben beschrieben aufweist.

In einem weiteren Aspekt betrifft die Offenbarung ein Verfahren zum Aufbauen von 3D-Formkörpern, das mindestens ein Strahleraggregat wie oben beschrieben verwendet.

In einem weiteren Aspekt werden einzelne Strahlereinheiten, vorzugsweise eine Gruppe von Strahlern mit voneinander verschiedener elektrischer Leistung beschaltet.

Weiterhin vorteilhaft kann es sein, mittels eines kontaktlosen Temperatursensors den Energieeintrag einer Gruppe von Strahlereinheiten zu messen und mittels des Messwertes die Strahlungsintensität der Gruppe zu regeln. Dabei wird die Temperatur vor und nach der Überfahrt des Strahleraggregats über eine definierte Fläche mit jeweils einem Messmittel gemessen.

Eine Vorteilhafte Anordnung der Strahlereinheiten weist eine lückenlose Aneinanderreihung auf, sodass sich ein ununterbrochenes Feld kontinuierlicher Strahlungsintensität ergibt.

Dabei ist es durch Drehung der Strahlereinheiten um einen Winkel alpha möglich, mehrere Ensembles einer Gruppe von Strahlereinheiten ineinander zu verschachteln, womit eine Erhöhung der emittierten Strahlungsintensität möglich wird.

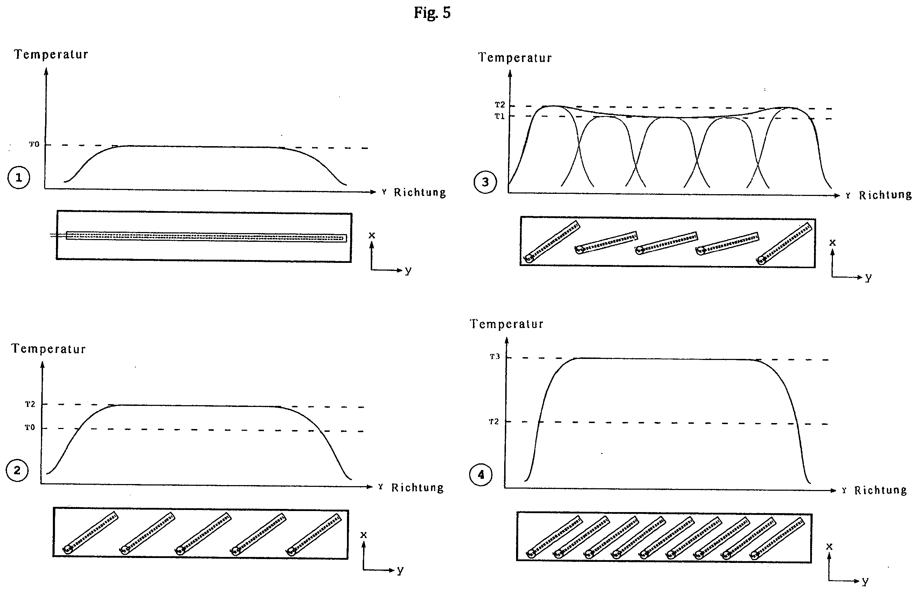

Es kann von Vorteil sein, unterschiedlich große Strahlereinheiten einzusetzen, um z.B. mittels kürzerer Strahlereinheiten an den Seiten des Strahleraggregats eine höhere Strahlungsintensität zu erzielen und somit Randeffekte auszugleichen, denen eine Reduktion der Strahlungsintensität an den Seiten der Strahlereinheiten zu Grund liegt. Diese ist dadurch begründet, dass sich die Strahlereinheiten in einem gewissen definierten Abstand zur beleuchteten Oberfläche befinden und in ihrer Ausdehnung begrenzt sind. Beides führt zu einer Unschärfe an den Rändern des erzeugten Strahlungsfelds. Da die Temperatur der bestrahlten Oberfläche direkt mit der Strahlungsintensität korreliert, führt dies zu unerwünschten Inhomogenitäten der Temperatur, was direkte negative Auswirkungen auf den Sintervorgang hat. Vgl. hierzu Fig.5-1.

Ein Miteinbeziehen der berechneten Schichtdaten im formgebenden Verfahren in der additiven Fertigung ermöglicht ein gezieltes Abschalten einer Gruppe von Strahlereinheiten an den Stellen, an denen kein Formkörper erzeugt werden soll. Somit kann einer unnötigen Degradation durch Temperaturerhöhung des bestrahlten Partikelmaterials entgegen gewirkt werden. Außerdem kann hiermit vorteilhaft Energie eingespart werden.

Durch die Verwendung eines Spektrumswandlers und Abführen der gefilterten Energie ist es möglich, das emittierte Spektrum des Strahleraggregats oder einer Gruppe von Strahlern oder einer einzelnen Strahlereinheit unabhängig von der Strahlungsleistung einzustellen. Dies ermöglicht eine vorteilhafte, weiträumigere Steuerung der Strahlungsintensität.

In einem weiteren Aspekt kann es vorteilsbehaftet sein, mehrere Spektrumswandler zu kaskadieren, um einen stärkeren Wandeleffekt zu erzielen oder mehrere bestimmte unvorteilhafte Wellenlängenbereiche zu filtern.

Statt eines Spektrumswandlers kann es in einigen Verfahren von Vorteil sein, ein hochtransparentes Material einzusetzen. Auch ein Spektrumswandler und ein transparentes Material als Berühr- und Staubschutz kann bevorzugt eingesetzt werden.

Von Vorteil kann sein, durch den Einsatz einer effizienten Kühlung weitaus höhere Filamenttemperaturen in den Strahlereinheiten mittels erhöhter Spannung zu erzeugen als handelsüblich. Dem Wienschen Verschiebungsgesetz zur Folge verschiebt sich dadurch das emittierte Strahlungsspektrum zu für den Prozess des High Speed Sintering vorteilhaft kürzeren Wellenlängen. Weiterhin kann dadurch die abgegebene Strahlungsintensität pro Strahlereinheit erhöht werden.

Eine effiziente Kühlung der Strahlereinheiten ist des Weiteren zu bevorzugen, um die Lebensdauer der Strahlereinheiten zu erhöhen.

### Beispiele

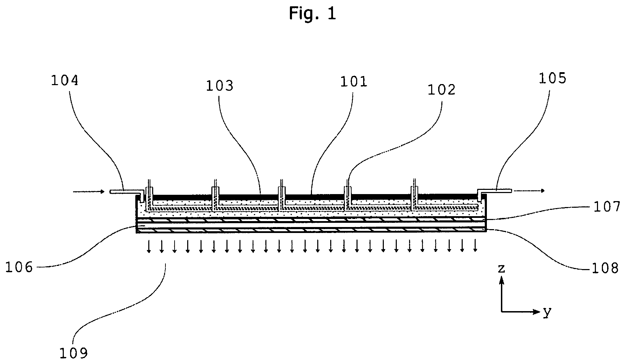

Beispielhaft dargestellt in Fig.1 ist ein Sinterstrahleraggregat 101 von der Seite betrachtet in der yz-Ebene. Handelsübliche L-förmige Strahlerröhren 102 sind nahtlos aneinander gesetzt oder wahlweise um einen Winkel in der Ebene gedreht, sodass sich in der seitlichen Betrachtung ein nahtloser Verbund ergibt. Die Strahler sind an ihrer kurzen Seite an der sich auch die elektrischen Zuleitungen befinden an der Oberseite des Strahleraggregats heraus geführt. Die Röhren sind des Weiteren in ein Kühlmedium 103 getaucht, welche über Zu-und Ableitung 104/105 . kontinuierlich ausgetauscht wird. Die durch die Strahlerröhren 102 erzeugte Abwärme wird somit abgeführt und die durch Aufheizungen des Strahlerglaskorpus hervor gerufene Sekundärstrahlung unterbunden. Durch die Kühlung kann nicht nur die Lebensdauer der Strahler stark erhöht werden, da die Molybdän-Durchführung an der Glasquetschung unterhalb der kritischen Temperatur von ca. 350°C gehalten werden kann, gleichzeitig lässt sich auch die Wendeltemperatur im Strahlerinneren erhöhen, wodurch sich das Spektrum der emittierten elektromagnetischen Strahlung zu erwünschten kleineren Wellenlängen hin verschieben lässt. Das emittierte Strahlungsspektrum befindet sich dabei in direktem Zusammenhang zur Wendeltemperatur, sog. Wiensches Verschiebungsgesetz. Statt einer Wendelfarbtemperatur von 2400 K sind somit über 2900 K möglich, was z.B. dem beim High Speed Sintering Prozess erwünschtem Strahlungsspektrum im Nahinfrarotbereich entspricht. Das Behältnis der Kühlflüssigkeit ist an seiner Unterseite durch ein für ein bestimmtes Spektrum der Strahlung durchlässiges Material 107 abgeschlossen, wobei beispielweise Borosilikatglas eingesetzt werden kann. Die Unterseite des Sinteraggregats bildet ein weiteres strahlungsdurchlässiges Material 108, welches neben einer möglichen Filtereigenschaft die Funktion eines Staub- und Berührschutzes erfüllt. Zwischen beiden Materialien befindet sich ein Leerraum 106. An der Unterseite der Vorrichtung kann die elektromagnetische Strahlung austreten 109.

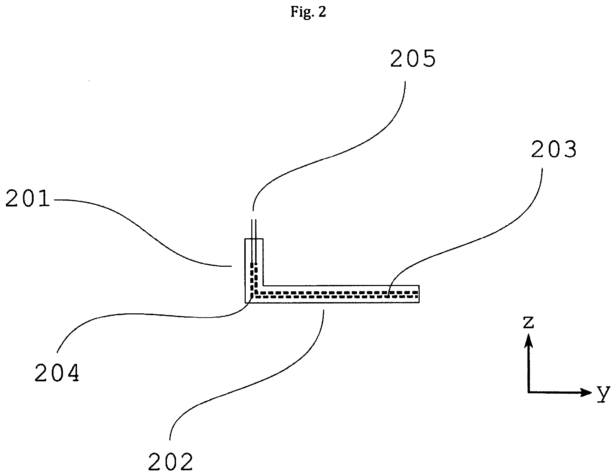

In Fig. 2 ist eine schematische Darstellung eines marktverfügbaren IR-Strahlers in L-Form 201. Hierbei ist die Wendel 203 welche dem Glaskolben 202 folgt um die Kante 204 geführt, wodurch sich die elektrische Durchführung 205 an der Oberseite des Strahlers befindet. Somit ist ein nahezu lückenloses Aneinandersetzen der Strahler möglich.

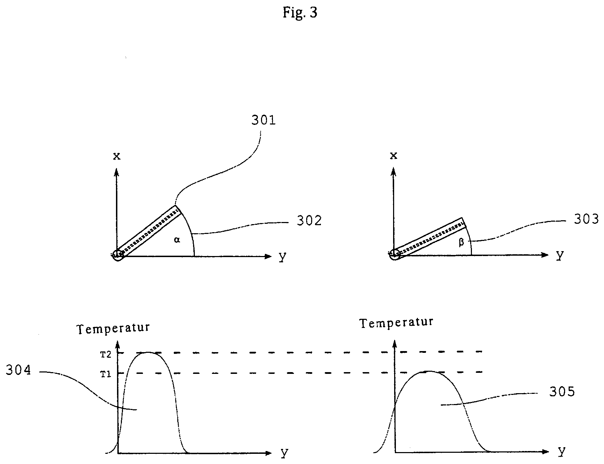

In Fig. 3 ist eine skizzenhafte Darstellung der Auswirkungen der Drehung eines Strahlers 301 an seinem Aufhängepunkt in der xy-Ebene. Wird der Strahler in x-Richtung über eine Fläche bewegt, konzentriert sich die emittierte Strahlung auf eine kleinere Fläche je größer der Winkel gewählt wird. Somit resultieren größere Drehwinkel 302 in einer höheren Temperatur T2, 304 auf dem Baufeld. Kleinere Winkel beta, 303 führen zu einer geringeren resultierenden Temperatur T1. Die Intensität der Strahlung befindet sich ein einem Zusammenhang von I = [1/cos alpha], das Verhältnis beider Temperaturen in grober Näherung in der Größenordnung dT = [ 1/ cos alpha ] ^1/4

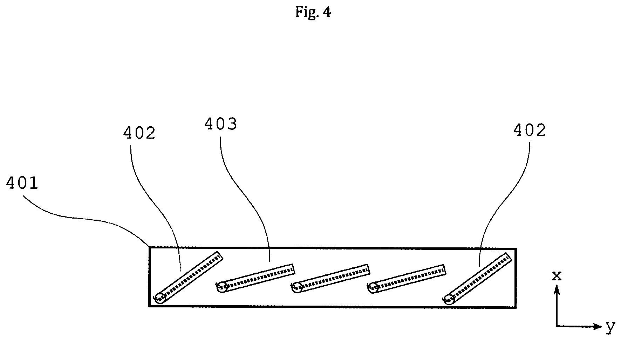

In Fig. 4 ist ein Sinterstrahleraggregat korrespondierend zu Fig. 1 mit beispielhaft gedrehten Strahlerröhren, hier von unten betrachtet in der xy-Ebene. Die äußeren Strahler 402 sind stärker gedreht als die innen liegenden 403, sodass an den Rändern eine höhere Strahlungskonzentration erreicht wird.

In Fig. 5 ist folgendes beschrieben:
1. Resultierende Temperaturverteilung auf dem Baufeld entlang der Y-Achse bei herkömmlichem Sinterstrahleraggregat nach dem Stand der Technik. Die Randbereiche erhalten weniger Strahlungsintensität, was niedrigere Temperaturen auf der bestrahlten Fläche zur Folge hat. Grund hierfür ist die unscharfe optische Abbildung der Strahler auf der bestrahlten Fläche, die in Näherung der Wurzel einer Gaußschen Verteilungsfunktion entspricht, wobei Sigma normiert grob dem Abstand der Strahlerröhre zur besagten Fläche folgt. Als Faustregel hat sich eine Verlängerung um jeweils den Abstand des Strahlers zum Baufeld an beiden Seiten etabliert.
   Niedrigere Temperaturen schlagen sich in verminderter mechanischer Stabilität und Qualität der erstellten Formkörper nieder. Um dies zu kompensieren muss der Strahler weitaus länger gebaut werden als die Breite des Baufeldes. Dies führt nicht nur zu einer Vergrößerung des gesamten Aggregats, sondern auch dazu, dass Teile der Vorrichtung durch den Strahler aufgeheizt werden, die sich außerhalb der zu bestrahlenden Fläche befinden, was in der Regel nicht gewünscht ist. Außerdem ist der Platz in der Vorrichtung häufig begrenzt. Dann müssen größere Teile des Baufeldes unbenutzt bleiben, was sich negativ auf die Produktivität und den Materialverbrauch auswirkt. Zusätzlich wird proportional mehr Energie hierfür benötigt.
2. Durch Drehung und nahtloser Aneinanderreihung kleinerer Strahlerröhren kann der Energieeintrag und damit die resultierende Temperatur auf dem Baufeld unabhängig vom Strahlerspektrum angepasst werden. Jede gedrehte Strahlerröhre erzeugt auf dem Baufeld eine Temperaturverteilung, die einer Gaußschen Verteilung folgt, siehe Verteilung des großen Strahlers in (1). Bei nahtloser Aneinanderreihung der Strahler ergibt sich in der Addition der Gaußschen Kurven genau eine gerade Linie. Im Beispiel kann dadurch eine Temperatur T2 erreicht werden, die höher als T0 in (1) liegt. Anders als in (1) kann nicht nur die resultierende Temperatur, sondern auch die Gesamtenergie und somit die Länge des Strahlers beliebig skaliert werden, was nach dem Stand der Technik eine kundenspezifische Anpassung der Strahlerröhre erfordern würde.
3. Eine Kombination einer nahtlosen Aneinanderreihung von Strahlerröhren mit voneinander verschiedenen Drehwinkeln erlaubt eine Temperaturanpassung in Y-Richtung und somit eine Kompensation der Randeffekte, wodurch Energie gezielter eingebracht und die Größe des Sinterstrahleraggregats reduziert werden kann. Um Randeffekte in Form von Temperaturverlusten auszugleichen wird an den Seiten des Baufeldes eine höhere Temperatur T2 eingestellt als in der Mitte, wo eine Temperatur von T1 ausreichend ist.
4. Durch Drehung der kleineren Strahlerröhren kann die Energiedichte stark erhöht werden. Hohe Energiedichten sind möglich bei Verwendung des Kühlkonzepts aus Fig. 1. Somit kann eine weitaus höhere Temperatur von T3 auf dem Baufeld erreicht werden. Die Maximalenergie eines langen Einzelstrahlers ist nach dem Stand der Technik durch die Leitungsdurchführung am Glaskolben mittels Molybdänplättchen auf ca. 15A bei 400V begrenzt, wodurch maximal Temperatur T0 erreicht werden kann. Zwar könnten durch versetztes Stapeln nach oben in Z-Richtung von herkömmlichen, langen und nicht gedrehten Strahlern theoretisch ähnlich hohe Temperaturen erreicht werden, was aber in der Praxis nur schwer zu realisieren wäre, da dies ab einer bestimmten Länge sehr dünne und damit stoßempfindliche Drahtwicklungen in den Strahlereinheiten nach sich ziehen würde. Außerdem wären derart aufgebaute Strahleraggregate aufgrund der benötigten Maßanfertigungen preislich nicht kompetitiv.

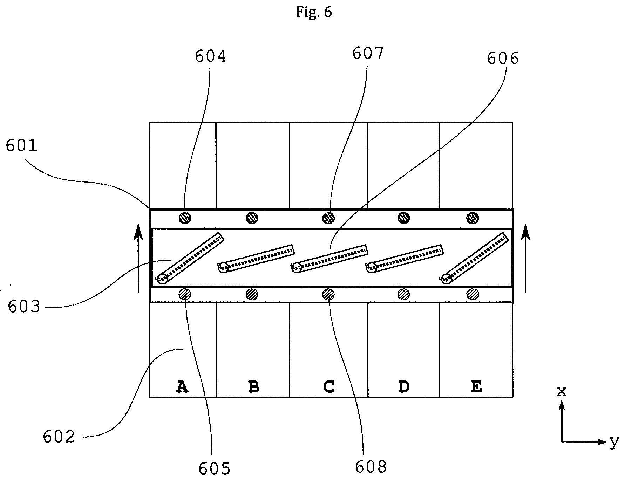

In Fig. 6 beschreibt eine Draufsicht auf das Strahleraggregat 601 in xy-Ebene mit gedrehten Einzelstrahlerröhren 603 und 606 während der Überfahrt über das Baufeld dargestellt, hier in Richtung nach oben zeigend. Dem Aggregat 601 sind Temperatursensoren 604, 605, 607 und 608 angefügt. Jedem Einzelemitter ist seine überstrichene Baufeldfläche A bis E zugeordnet. Mittels der Temperatursensoren, beispielhaft Infrarot-Pyrometer, kann für jede korrespondierende Fläche A bis E die durch die eines jeden Strahlers eingebrachte Energie in das Baufeld resultierende Temperatur ermittelt werden und zwar sowohl vor, als auch nach der Belichtung. Das Sensorpaar 604 und 605 misst dabei die Spur des ersten Strahlers auf Fläche A usw.

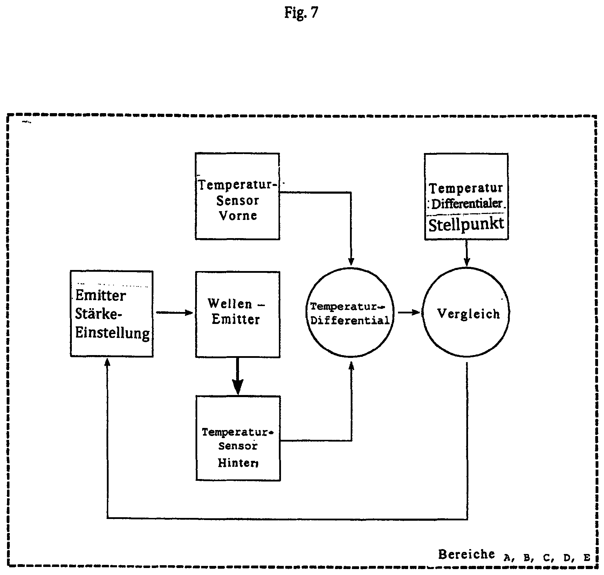

Fig. 7 ist ein Blockschaltbild einer beispielhaften Ausführung eines rudimentären Regelalgorithmus zur Steuerung der gestellten Leistung jedes einzelnen Emitters um eine gewünschte Temperaturverteilung auf dem Baufeld zu erzielen.

Die Differenz der Temperaturen vor und nach der Belichtung wird mit einem Sollwert verglichen und anhand dessen eine Leistungsanpassung der einzelnen Strahler zu jeder korrespondierenden Fläche, hier beispielhaft A bis E, berechnet und durchgeführt. Die Sollwerte können fest hinterlegt sein oder einem bestimmtem Algorithmus folgen, sodass es möglich wird, Teile des Baufeldes vom Belichtungsvorgang gezielt auszusparen. Die durch die Temperaturerhöhung bei Bestrahlung durch die Emitter hervorgerufene Alterung des auf dem Baufeld befindlichen Partikelmaterials kann somit begrenzt werden. Dies führt zu einer erhöhten Recyclingrate des Partikelmaterials, und damit zu Einsparung von Kosten durch Materialverbrauch.

### Bezugszeichenliste

| Fig. | 1 | |
|---|---|---|
| | 101 | Sinterstrahleraggregat in einer Beispielhaften Ausführung |
| | 102 | handelsübliche Strahlerröhre mit nahtlosem Übergang |
| | 103 | In einem konstanten Strom befindliche Kühlflüssigkeit, welche zugleich als Strahlungsfilter agiert, beispielhaft demin. Wasser. In einer anderen Ausführung können auch Gase oder Druckluft verwendet werden. |
| | 104 | Zuleitung der Flüssigkeit |
| | 105 | Rückleitung der Flüssigkeit |
| | 106 | Leerraum um Wärmeübertragung zu minimieren |
| | 107 | Für gefilterte Strahlung durchlässiges Material und/oder Spektrumswandler als Behältnisgrenze für Flüssigkeit, beispielhaft temperaturbeständiges Borosilikatglas |
| | 108 | Für gefilterte Strahlung durchlässiges Material zum Schutz vor Verunreinigungen, beispielhaft temperaturbeständiges Borosilikatglas oder Spektrumswandler |
| | 109 | Gefilterte elektromagnetische Strahlung, beispielsweise sehr nahinfrarote < 1 µm |

| Fig. | 2 | |
|---|---|---|
| | 201 | Beispielhaft dargestellt eine handelsübliche Strahlröhre im Schnitt in YZ-Ebene |
| | 202 | Glaskolben der Strahlröhre, beispielhaft in L-Form |
| | 203 | Der Form des Glaskolbens folgende Heizwendel |
| | 204 | Knick in Strahlröhre ohne Unterbrechung der Heizwendel |
| | 205 | Elektrische Durchführung und Anschluss der Heizwendel |

| Fig. | 3 | |
|---|---|---|
| | 301 | Strahlerröhre in der Draufsicht |
| | 302 | Drehung in der Ebene um den Winkel alpha |
| | 303 | Drehung in der Ebene um den Winkel beta, wobei beta < alpha |
| | 304 | Größerer Drehwinkel alpha führt zu höherer Temperatur und kleinerer Breite der Bestrahlung |
| | 305 | Kleinerer Drehwinkel beta hat geringere Temperatur zur Folge |

| Fig. | 4 | |
|---|---|---|
| | 401 | Sinterstrahleraggregat in einer beispielhaften Ausführung von unten betrachtet, xy-Ebene |
| | 402 | in der Ebene gedrehte Strahlröhre |
| | 403 | Um einen anderen, kleineren Winkel in der xy-Ebene gedrehte Strahlröhre, welche nahtlos anschließt |

| Fig. | 5 | |
|---|---|---|
| | 5-1 | Resultierende Temperaturverteilung auf dem Baufeld entlang der Y-Achse bei herkömmlichem Sinterstrahleraggregat nach dem Stand der Technik mit erreichbarer Maximaltemperatur T0 |
| | 5-2 | Durch Drehung und nahtloser Aneinanderreihung kleinerer Strahlerröhren kann der Energieeintrag und damit die resultierende Temperatur T2 auf dem Baufeld unabhängig vom Strahlerspektrum angepasst werden. |
| | 5-3 | Kombination einer nahtlosen Aneinanderreihung von Strahlerröhren mit voneinander verschiedenen Drehwinkeln erlaubt eine Temperaturanpassung in Y-Richtung und somit eine Kompensation der Randeffekte, wodurch Energie gezielter eingebracht und die Größe des Sinterstrahleraggregats reduziert werden kann. |
| | 5-4 | Durch Drehung der kleineren Strahlerröhren kann die Energiedichte stark erhöht werden. Somit kann eine weitaus höhere Temperatur von T3 im Vergleich mit T2 aus Fig. 5-2 auf dem Baufeld erreicht werden. |

| Fig. | 6 | |
|---|---|---|
| | 601 | Sinterstrahleraggregat, wird bewegt über Baufeld, welches in die Bereiche A bis E eingeteilt wird |
| | 602 | Von Strahler 403 bei der Überfahrt abgedeckter Bereich A auf dem Baufeld |
| | 603 | Gedrehte Strahlerröhre |
| | 604 | Pyrometer gerichtet auf Bereich A auf dem Baufeld misst die Baufeldtemperatur vor der Überfahrt mit dem Sinterstrahleraggregat |
| | 605 | Pyrometer gerichtet auf Bereich A auf dem Baufeld misst die Baufeldtemperatur nach der Überfahrt mit dem Sinterstrahleraggregat |
| | 606 | Weitere gedrehte Strahlerröhre, hier beispielhaft in einem anderen Winkel |
| | 607 | Beispielhaft Pyrometer gerichtet auf Bereich C auf dem Baufeld misst die Baufeldtemperatur vor der Überfahrt mit dem Sinterstrahleraggregat |
| | 608 | Beispielhaft Pyrometer gerichtet auf Bereich C auf dem Baufeld misst die Baufeldtemperatur nach der Überfahrt mit dem Sinterstrahleraggregat |

| Fig. | 7 | |
|---|---|---|
| | | Blockschaltbild einer beispielhaften Ausführung eines rudimentären Regelalgorithmus zur Steuerung der gestellten Leistung jedes einzelnen Emitters um eine gewünschte Temperaturverteilung auf dem Baufeld zu erzielen. |

## Patentansprüche

1. Strahleraggregat (101, 401, 601) geeignet für eine 3D-Druckvorrichtung, wobei das Strahleraggregat mehrere Strahlereinheiten (102, 201, 301, 402, 603) aufweist, die auf einem Haltemittel angebracht sind und wobei jede Strahlereinheit in einem definierten Drehwinkel alpha auf dem Haltemittel angebracht ist und die Strahlereinheiten unterschiedliche oder den selben definierten Drehwinkel (302, 304) alpha aufweisen oder ein oder mehrere Strahlereinheiten einen definierten Drehwinkel alpha der Gruppe 1 und eine oder mehrere Strahlereinheiten einen anderen definierten Drehwinkel alpha der Gruppe 2 aufweisen und die Strahlereinheiten mit einem oder mehreren Kühlmitteln kombiniert sind und
wobei der Drehwinkel alpha im Randbereich des Strahleraggregats unterschiedlich ist zum Innenbereich des Strahleraggregats und wobei die Strahlungsintensität im Randbereich des/der Strahleraggregat(s)/e höher eingestellt ist als im Innenbereich des Strahleraggregats.

2. Strahleraggregat nach Anspruch 1, wobei die Strahlereinheiten mit einem Spektrumswandler kombiniert sind.

3. Strahleraggregat nach Anspruch 2, wobei die Strahlereinheiten mit einem Kühlmittel, vorzugsweise in ihrer Gesamtheit, umspült werden, vorzugsweise die Strahlereinheiten direkt umspült werden.

4. Strahleraggregat nach Anspruch 2, wobei das Kühlmittel, z.B. Wasser oder/und ein Spektrumswandler ist.

5. Strahleraggregat nach Anspruch 3, wobei das Strahleraggregat im Wesentlichen ein kurzwelliges Spektrum aussendet.

6. Strahleraggregat nach einem der vorhergehenden Ansprüche, wobei das Strahleraggregat ein im Wesentlichen gleichmäßiges Spektrum auf dem Baufeld erzeugt.

7. Strahleraggregat nach einem der vorhergehenden Ansprüche, wobei die Strahlereinheiten im Wesentlichen eine L-Form aufweisen.

8. 3D-Druckvorrichtung geeignet zum Aufbauen von 3D-Formkörpern, die mindestens ein Strahleraggregat nach einem der Ansprüche 1 bis 6 aufweist.

9. Verfahren zum Aufbauen von 3D-Formkörpern, das mindestens ein Strahleraggregat (101, 401, 601) nach einem der Ansprüche 1 bis 6 verwendet.

## Claims

1. A radiation-emitting set (101, 401, 601), suitable for a 3D printing apparatus, wherein the radiation-emitting set comprises a plurality of radiation-emitting units (102, 201, 301, 402, 603) which are mounted on a holding means and wherein each radiation-emitting unit is mounted on the holding means at a defined angle of rotation alpha and the radiation-emitting units have different or the same defined angle(s) of rotation (302, 304) alpha or one or more radiation-emitting units have one defined angle of rotation alpha of group 1 and one or more radiation-emitting units have another defined angle of rotation alpha of group 2 and the radiation-emitting units are combined with one or more cooling means, and
wherein the angle of rotation alpha in the peripheral area of the radiation-emitting set is different to the interior area of the radiation-emitting set and wherein the radiation intensity in the peripheral area of the radiation-emitting set(s) is set higher than in the interior area of the radiation-emitting set.

2. The radiation-emitting set according to claim 1, wherein the radiation-emitting units are combined with a spectrum converter.

3. The radiation-emitting set according to claim 2, wherein the radiation-emitting units are flushed with a coolant, preferably in their entirety, the radiation-emitting units preferably being flushed directly.

4. The radiation-emitting set according to claim 2, wherein the coolant is, for example, water or/and a spectrum converter.

5. The radiation-emitting set according to claim 3, wherein the radiation-emitting set substantially emits a short-wave spectrum.

6. The radiation-emitting set according to any one of the preceding claims, wherein the radiation-emitting set produces a substantially uniform spectrum on the construction field.

7. The radiation-emitting set according to any one of the preceding claims, wherein the radiation-emitting units are substantially L-shaped.

8. A 3D printing apparatus suitable for building up 3D shaped articles, said apparatus comprising at least one radiation-emitting set according to any one of claims 1 to 6.

9. A method for building up 3D shaped articles, which uses at least one radiation-emitting set (101, 401, 601) according to any one of claims 1 to 6.

## Revendications

1. Ensemble d'émetteurs de rayonnement (101, 401, 601) appropriée pour un dispositif d'impression 3D, l'ensemble d'émetteurs de rayonnement comprenant une pluralité d'unités de rayonnement (102, 201, 301, 402, 603) montées sur un moyen de support, chaque unité de rayonnement étant montée sur le moyen de support selon un angle de rotation alpha défini, les unités de rayonnement ayant différents ou le même angle(s) de rotation alpha défini(s) (302, 304), ou une ou plusieurs unités de rayonnement ayant un angle de rotation alpha défini du groupe 1 et une ou plusieurs unités de rayonnement ayant un autre angle de rotation alpha défini du groupe 2, et les unités de rayonnement étant combinées avec un ou plusieurs moyens de refroidissement, et
l'angle de rotation alpha dans la zone de bordure de l'ensemble d'émetteurs de rayonnement étant différent de la zone intérieure de l'ensemble d'émetteurs de rayonnement et l'intensité de rayonnement étant réglée plus élevée dans la zone de bordure dudit/desdits ensemble(s) d'émetteurs de rayonnement que dans la zone intérieure de l'ensemble d'émetteurs de rayonnement.

2. Ensemble d'émetteurs de rayonnement selon la revendication 1, dans lequel les unités de rayonnement sont combinées avec un convertisseur de spectre.

3. Ensemble d'émetteurs de rayonnement selon la revendication 2, dans lequel les unités de rayonnement sont balayées par un réfrigérant, de préférence dans leur totalité, de préférence les unités de rayonnement sont directement balayées.

4. Ensemble d'émetteurs de rayonnement selon la revendication 2, dans lequel le réfrigérant est par exemple de l'eau ou/et un convertisseur de spectre.

5. Ensemble d'émetteurs de rayonnement selon la revendication 3, dans lequel l'ensemble d'émetteurs de rayonnement émet essentiellement un spectre d'ondes courtes.

6. Ensemble d'émetteurs de rayonnement selon l'une quelconque des revendications précédentes, dans lequel l'ensemble d'émetteurs de rayonnement produit un spectre sensiblement uniforme sur le champ de construction.

7. Ensemble d'émetteurs de rayonnement selon l'une quelconque des revendications précédentes, dans lequel les unités de rayonnement ont sensiblement une forme en L.

8. Dispositif d'impression 3D adapté à la construction de corps façonnés 3D, comprenant au moins un ensemble d'émetteurs de rayonnement selon l'une quelconque des revendications 1 à 6.

9. Procédé de construction de corps façonnés en 3D, qui utilise au moins un ensemble d'émetteurs de rayonnement (101, 401, 601) selon l'une quelconque des revendications 1 à 6.
